# EUROPEAN PATENT APPLICATION

(11) **EP 3 441 922 A1**
(43) Date of publication of application: **13.02.2019**
(21) Application number: 18188233.3
(22) Date of filing: 09.08.2018
(51) Int. Cl.: G06Q 20/08, G06Q 20/22, G06Q 20/38, G06Q 30/06, G06Q 30/02

(54) **TRANSACTION SETTLEMENT SYSTEM, TRANSACTION PROCESSING APPARATUS, SETTLEMENT APPARATUS, AND CONTROL METHOD FOR A SETTLEMENT APPARATUS**

(30) Priority: 10.08.2017 JP 2017155211
(71) Applicant: Toshiba TEC Kabushiki Kaisha, Tokyo 141-8562 (JP)
(72) Inventor: KURIHARA, Naoki, Shinagawa-ku,, Tokyo 141-8562 (JP)
(74) Representative: Takeuchi, Maya

(57) **Abstract**

In accordance with an embodiment, a transaction settlement system includes a transaction processing apparatus and a settlement apparatus. The transaction processing apparatus includes an output device and a controller. The controller of the transaction processing apparatus generates a symbol by coding a transaction amount and payment amounts according to payment methods and causes the output device to output the symbol to a portable medium. The settlement apparatus includes a reader and a controller. The controller of the settlement apparatus acquires the transaction amount and the payment amounts according to the payment methods by decoding the symbol read by the reader from the portable medium.

## Description

### FIELD

An embodiment described here generally relates to a transaction settlement system, a transaction processing apparatus and a settlement apparatus which are included in this system, and a control method for a settlement apparatus.

### BACKGROUND

There are various payment methods such as cash payment, voucher payment, credit-card payment, debit-card payment, and electronic-money payment for payment of a transaction associated with commodity purchase and sale or service rendering. Many stores of retail business and service business accept a plurality types of payment methods. It should be noted that a store that accepts credit-card payment needs to ensure a line with a credit-card company and a store that accepts debit-card payment needs to ensure a line with a bank.

In view of this, at a shopping center including a plurality of stores as tenants, a developer generally ensures lines between the plurality of stores and a credit-card company or a bank. A settlement apparatus at each tenant communicates with a server of the credit-card company or the bank via the developer and processes card settlement by credit card or debit card.

Therefore, each tenant has, at the store, a settlement apparatus capable of processing settlement by various cards in addition to a transaction processing apparatus such as a point of sales (POS) terminal. In a case of card settlement, an employee of the store operates the settlement apparatus to process the card settlement on the basis of a processing result of the transaction processing apparatus. For example, in a case of credit-card settlement, the employee of the store operates the settlement apparatus to start the credit-card settlement, input a credit-card payment amount, and then instruct to execute the credit-card settlement. The same applies to a case of debit-card settlement. Therefore, there is a problem in that, in a case of a transaction for which payment is performed by both credit card and debit card for example, it is necessary to individually perform settlement operations of credit-card payment and debit-card payment, which makes operations on the settlement apparatus complicated.

### SUMMARY OF INVENTION

To solve such problem, there is provided a transaction settlement system, comprising:
a transaction processing apparatus that calculates a total transaction amount of a transaction and receives payment amounts for the total transaction amount in accordance with payment methods; and
a settlement apparatus that performs settlement of the transaction for which the payment amounts have been received by the transaction processing apparatus, wherein
the transaction processing apparatus includes
   an input device that inputs data associated with the transaction,
   an output device that outputs a symbol to a portable medium, the symbol including a transaction record of the transaction for which the payment amounts have been received, and
   a first controller that
      generates the symbol by coding the total transaction amount and the payment amounts according to the payment methods, and
      causes the portable medium to output the symbol to the output device, and
the settlement apparatus includes
   a reader that reads the symbol from the portable medium, and
   a second controller that
      acquires the total transaction amount and the payment amounts according to the payment methods by decoding the symbol read by the reader, and
      performs settlement of the acquired payment amounts according to the payment methods for the acquired total transaction amount in accordance with the payment methods of the acquired payment amounts.

Preferably, the transaction processing apparatus further includes
a memory including
   a transaction amount memory area for storing the total transaction amount, and
   memory areas according to payment types for storing the payment amounts for the total transaction amount while each of the payment amounts is associated with each of the payment types identifying the payment methods, and
the first controller
   calculates the total transaction amount on the basis of the input data associated with the transaction and stores the calculated total transaction amount in the transaction amount memory area,
   calculates the payment amounts on the basis of the input data associated with the transaction and stores the calculated payment amounts in the memory areas according to the payment types, and
   generates the symbol by coding the total transaction amount stored in the transaction amount memory area and the payment amounts according to the payment types which are stored in the memory areas according to the payment types.

Preferably still, the data associated with the transaction, which is input by the input device, includes a commodity code that identifies a commodity that is a target of the transaction, the number of commodities that are targets of the transaction, the payment amounts, and the payment methods,
the memory includes a commodity master for storing a commodity record in association with the commodity code,
the commodity record includes a price of the commodity, and
the first controller
   reads the commodity record associated with the input commodity code from the commodity master,
   calculates the total transaction amount on the basis of the read commodity record and the input number of commodities that are the targets of the transaction, and
   stores the input payment amount in the memory areas according to the payment types by which the input payment method is identified.

Preferably yet, the first controller
calculates a transaction amount of one of a tangible object and an intangible object that is a target of the transaction for each tax rate of a tax imposed on the one of the tangible object and the intangible object, the transaction amount including the tax, and
generates the symbol by coding the calculated transaction amount for each tax rate and the tax rate in addition to the total transaction amount and the payment amounts according to the payment methods, and
the second controller
   acquires the tax rate and the transaction amount for each tax rate by decoding the symbol read by the reader in addition to the total transaction amount and the payment amounts according to the payment methods,
   calculates a tax-excluded transaction amount for each tax rate on the basis of the acquired tax rate and the acquired transaction amount for each tax rate, and
   calculates a point to be given to a customer with respect to the tax-excluded transaction amount for each tax rate.

Suitably, the second controller issues a predetermined ticket in a manner that depends on the acquired total transaction amount.

The present invention also relates to a transaction processing apparatus that calculates a transaction amount of a transaction and receives payment amounts for the transaction amount in accordance with payment methods, comprising:
an input device that inputs data associated with the transaction;
an output device that outputs a symbol to a portable medium, the symbol including a transaction record of the transaction for which the payment amounts have been received; and
a controller that
   generates the symbol by coding the transaction amount and the payment amounts according to the payment methods, and
   causes the output device to output the symbol to the portable medium.

Preferably, the transaction processing apparatus further comprises:
a memory including
   a transaction amount memory area for storing the transaction amount, and
   memory areas according to payment types for storing the payment amounts for the transaction amount while each of the payment amounts is associated with each of the payment types identifying the payment methods, wherein
the controller
   calculates the transaction amount on the basis of the input data associated with the transaction and stores the calculated transaction amount in the transaction amount memory area,
   calculates the payment amounts on the basis of the input data associated with the transaction and stores the calculated payment amounts in the memory areas according to the payment types, and
   generates the symbol by coding the transaction amount stored in the transaction amount memory area and the payment amounts according to the payment types which are stored in the memory areas according to the payment types.

Preferably still, the data associated with the transaction, which is input by the input device, includes a commodity code that identifies a commodity that is a target of the transaction, the number of commodities that are targets of the transaction, the payment amounts, and the payment methods,
the memory includes a commodity master for storing a commodity record in association with the commodity code,
the commodity record includes a price of the commodity, and
the first controller
   reads the commodity record associated with the input commodity code from the commodity master,
   calculates the transaction amount on the basis of the read commodity record and the input number of commodities that are the targets of the transaction, and
   stores the input payment amount in the memory areas according to the payment types by which the input payment method is identified.

The present invention also concerns a settlement apparatus that performs settlement of a transaction having a transaction amount for which payment amounts have been received in accordance with payment methods, comprising:
a reader that reads a symbol from a portable medium, the symbol being obtained by coding the transaction amount and the payment amounts according to the payment methods; and
a controller that
   acquires the transaction amount and the payment amounts according to the payment methods by decoding the symbol read by the reader, and
   performs settlement of the acquired payment amounts according to the payment methods for the acquired transaction amount in accordance with the payment methods of the acquired payment amounts.

The present invention further relates to a settlement method for a settlement apparatus that performs settlement of a transaction having a transaction amount for which payment amounts have been received in accordance with payment methods, comprising the steps of:
reading a symbol from a portable medium by using a reader, the symbol being obtained by coding the transaction amount and the payment amounts according to the payment methods;
acquiring the transaction amount and the payment amounts according to the payment methods by decoding the read symbol; and
performing settlement of the acquired payment amounts according to the payment methods for the acquired transaction amount in accordance with the payment methods of the acquired payment amounts.

The present invention further concerns a non-transitory computer readable medium storing a program causing a computer to execute the method described above.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic diagram of a transaction settlement system according to an embodiment.
Fig. 2 is a schematic diagram showing an example of information included in a two-dimensional data code in the embodiment.
Fig. 3 is a block diagram showing a POS terminal according to the embodiment.
Fig. 4 is a block diagram showing a settlement terminal according to the embodiment.
Fig. 5 is a flowchart showing processing executed by a processor of the POS terminal according to the embodiment in accordance with a program.
Fig. 6 is a flowchart showing processing executed by a processor of the settlement terminal according to the embodiment in accordance with a program.
Fig. 7 is a flowchart showing processing executed by the processor of the settlement terminal according to the embodiment in accordance with the program.

### DETAILED DESCRIPTION

In accordance with one embodiment, a transaction settlement system includes a transaction processing apparatus and a settlement apparatus. The transaction processing apparatus calculates a total transaction amount of a transaction and receives payment amounts for the total transaction amount in accordance with payment methods. The transaction processing apparatus includes an input device, an output device, and a first controller. The input device inputs data associated with the transaction. The output device outputs a symbol to a portable medium, the symbol including a transaction record of the transaction for which the payment amounts have been received. The first controller generates the symbol by coding the total transaction amount and the payment amounts according to the payment methods. Moreover, the first controller causes the portable medium to output the symbol to the output device. The settlement apparatus performs settlement of the transaction for which the payment amounts have been received by the transaction processing apparatus. The settlement apparatus includes a reader and a second controller. The reader reads the symbol from the portable medium. The second controller acquires the total transaction amount and the payment amounts according to the payment methods by decoding the symbol read by the reader. Moreover, the second controller performs settlement of the acquired payment amounts according to the payment methods for the acquired total transaction amount in accordance with the payment methods of the acquired payment amounts.

Hereinafter, an embodiment of a transaction settlement system capable of simplifying operations on a settlement apparatus will be described with reference to the drawings. In the drawings, identical symbols denote identical or similar parts. Note that this embodiment exemplifies a transaction settlement system used at a tenant of a shopping center. It is assumed that the tenant is a retail store that sell commodities taxed at three different tax rates of 5%, 10%, and 15%. Further, it is assumed that the tenant accepts three types of payment methods of cash payment, credit-card payment, and debit-card payment as a payment method for a transaction associated with purchase and sale of their commodities.

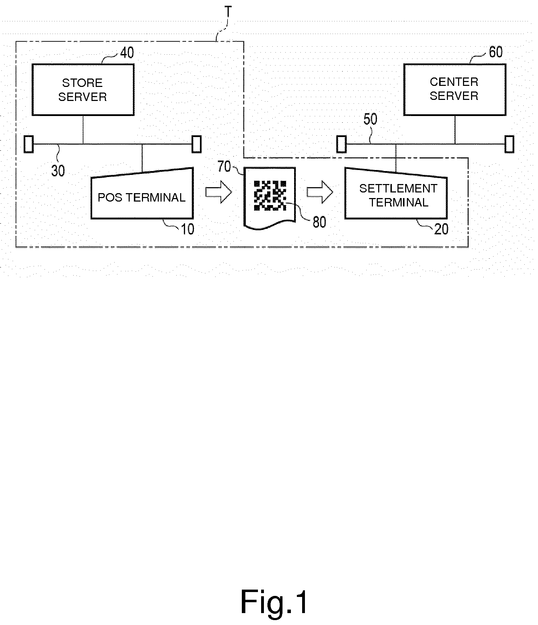

Fig. 1 is a schematic diagram of a transaction settlement system used by a tenant T. The transaction settlement system includes a POS terminal 10 and a settlement terminal 20.

The POS terminal 10 is an example of a transaction processing apparatus. The POS terminal 10 processes commodity sales data and calculates a transaction amount on the basis of an input of data associated with a commodity or commodities purchased and sold as one transaction. The POS terminal 10 receives payment amounts for this transaction amount in accordance with payment types, and processes the payment amounts. Note that the payment type will be described later. Thus, in other words, the POS terminal 10 receives the payment amounts for this transaction amount in accordance with payment methods, and processes the payment amounts. The POS terminal 10 is connected to a store server 40 via a first network 30. The store server 40 is a computer that collects and sums up commodity sales data processed by the POS terminal 10 and manages sales, inventories, and the like. Although Fig. 1 shows only one POS terminal 10, two or more POS terminals 10 may be connected to the first network 30.

The settlement terminal 20 is an example of the settlement apparatus. The settlement terminal 20 processes settlement of the transaction processed by the POS terminal 10 that is the transaction processing apparatus. The settlement terminal 20 is capable of performing various types of settlement such as credit-card settlement, debit-card settlement, and electronic-money settlement. This settlement terminal 20 is connected to a center server 60 via a second network 50. The center server 60 is a computer managed by a developer of the shopping center. The center server 60 is connected to respective servers of a credit-card company and a bank via networks (not shown).

In this embodiment, the POS terminal 10 has a function of printing a two-dimensional data code 80 on a receipt 70 to be issued in each transaction. The settlement terminal 20 has a function of reading the two-dimensional data code 80.

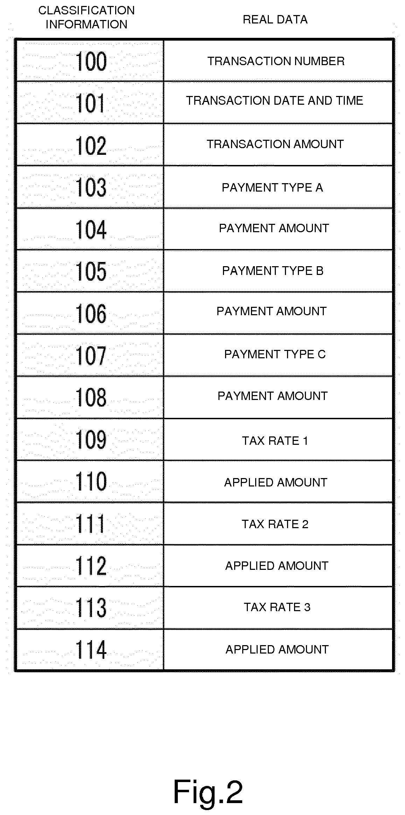

Fig. 2 is a schematic diagram showing an example of information included in the two-dimensional data code 80. As shown in Fig. 2, the two-dimensional data code 80 includes a plurality of pairs of classification information and real data. The classification information and the real data in each pair are associated with each other. The classification information is a unique code set in each item associated therewith. Items of the real data include a transaction number, a transaction date and time, a transaction amount, a flag of a payment type A, a payment amount of the payment type A, a flag of a payment type B, a payment amount of the payment type B, a flag of a payment type C, a payment amount of the payment type C, a flag of a tax type D, an applied amount of the tax type D, a flag of a tax type E, an applied amount of the tax type E, a flag of a tax type F, an applied amount of the tax type F, and the like.

The payment types are payment methods for a transaction amount associated with commodity purchase and sale or service rendering. The payment types A to C are information set in the respective payment methods in order to identify the payment methods. Hereinafter, the payment types will be sometimes referred to as the payment methods. In this embodiment, it is assumed that the credit-card settlement is the payment type A, the debit-card settlement is the payment type B, and the cash settlement is the payment type C. The flag of the payment type A is "0" when the payment amount of the payment type A is 0 yen. The flag of the payment type A is "1" when the payment amount of the payment type A is larger than 0 yen. The same applies to the flag of the payment type B and the flag of the payment type C.

The tax types D, E, F are information set in the respective tax rates in order to identify the tax rates imposed on the commodities. In this embodiment, it is assumed that the tax rate 5% is the tax type D, the tax rate 10% is the tax type E, and the tax rate 15% is the tax type F. The flag of the tax type D is "0" when the applied amount of the tax type D is 0 yen. The flag of the tax type D is "1" when the applied amount of the tax type D is larger than 0 yen. The same applies to the flag of the tax type E and the flag of the tax type F. Here, the two-dimensional data code 80 is an example of a symbol obtained by coding the transaction amount and the payment amounts according to the payment types.

When a customer tells an employee of the store who operates the POS terminal 10 that the customer wants to pay the transaction amount by credit card or debit card, the employee of the store causes the settlement terminal 20 to read the two-dimensional data code 80 printed on the receipt 70 issued from the POS terminal 10. Here, the receipt 70 is an example of a portable medium with which the symbol (two-dimensional data code 80) is output (printed).

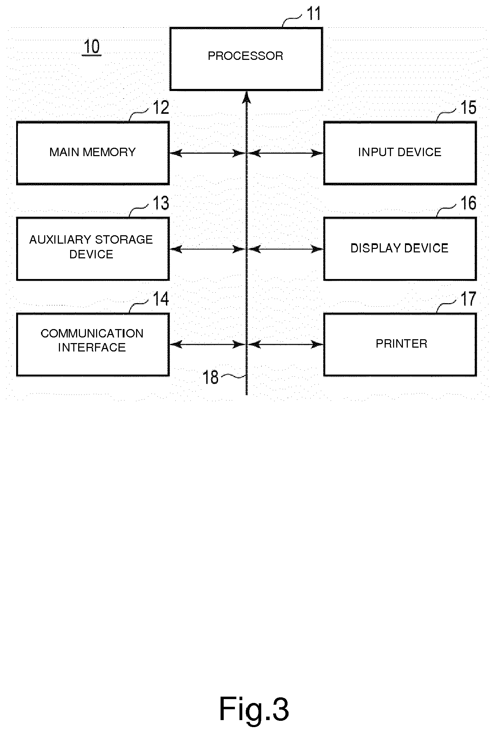

Fig. 3 is a block diagram showing the POS terminal 10. The POS terminal 10 includes a processor 11, a main memory 12, an auxiliary storage device 13, a communication interface 14, an input device 15, a display device 16, a printer 17, and a system bus 18. The POS terminal 10 connects the processor 11, the main memory 12, the auxiliary storage device 13, the communication interface 14, the input device 15, the display device 16, and the printer 17 to the system bus 18 directly or via a signal input/output circuit to thereby enable data communication between the processor 11 and the other blocks to be performed.

The POS terminal 10 configures a computer together with the processor 11, the main memory 12, the auxiliary storage device 13, and the system bus 18 that connects the processor 11, the main memory 12, and the auxiliary storage device 13.

The processor 11 corresponds to a central part of that computer. The processor 11 controls the respective blocks in order to realize various functions as the POS terminal 10 in accordance with an operating system and an application program.

The main memory 12 corresponds to a main storage part of that computer. The main memory 12 includes a nonvolatile memory area and a volatile memory area. The main memory 12 stores the operating system and the application program in the nonvolatile memory area. Further, the main memory 12 may store data necessary for the processor 11 to execute processing for controlling the respective blocks in the nonvolatile memory area or the volatile memory area. The main memory 12 uses the volatile memory area as a work area the data of which is rewritable by the processor 11 as appropriate.

The auxiliary storage device 13 corresponds to an auxiliary storage part of that computer. Examples of the auxiliary storage device 13 can include an electric erasable programmable read-only memory (EEPROM), a hard disc drive (HDD), a solid state drive (SSD), and the like. The auxiliary storage device 13 stores data to be used by the processor 11 to perform various types of processing and data generated in processing of the processor 11. The auxiliary storage device 13 may store the above-mentioned application program.

The communication interface 14 is for connecting the store server 40 to the POS terminal 10 (processor 11) via the first network 30 and sending and receiving data in accordance with a predetermined communication protocol between the POS terminal 10 and the store server 40.

The input device 15 inputs data associated with commodities to be purchased and sold as one transaction. The input device 15 includes, for example, a keyboard, a hand scanner, a stationary scanner, a radio frequency identification (RFID) reader, and the like.

The display device 16 displays the contents of the transaction. The display device 16 includes, for example, a liquid-crystal display, an electroluminescence (EL) display, and the like. The POS terminal 10 may include a display device for an operator and a display device for a customer.

The printer 17 prints the two-dimensional data code 80 and other transaction information on a receipt sheet and issues the receipt 70. Examples of the printer 17 can include a laser printer, an inkjet printer, and the like.

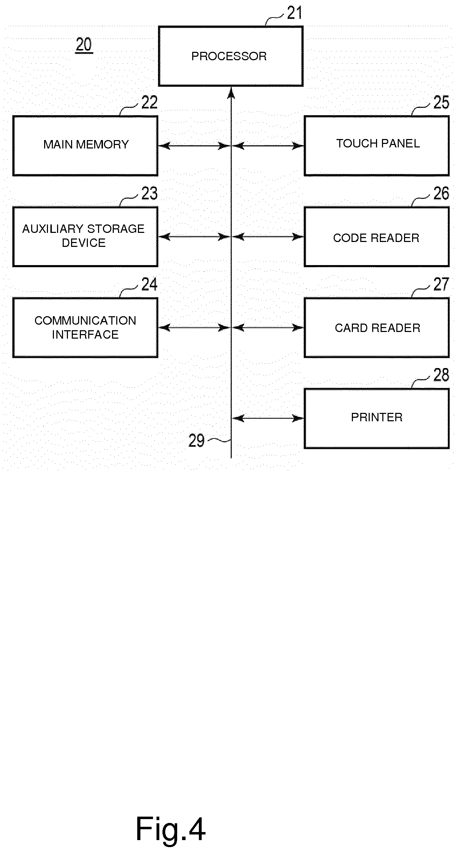

Fig. 4 is a block diagram showing the settlement terminal 20. The settlement terminal 20 includes a processor 21, a main memory 22, an auxiliary storage device 23, a communication interface 24, a touch panel 25, a code reader 26, a card reader 27, a printer 28, and a system bus 29. The settlement terminal 20 connects the processor 21, the main memory 22, the auxiliary storage device 23, the communication interface 24, the touch panel 25, the code reader 26, the card reader 27, and the printer 28 to the system bus 29 directly or via a signal input/output circuit to thereby enable data communication between the processor 21 and the other respective blocks to be performed.

The settlement terminal 20 configures a computer together with the processor 21, the main memory 22, the auxiliary storage device 23, and the system bus 29 that connects the processor 21, the main memory 22, and the auxiliary storage device 23.

The processor 21 corresponds to a central part of that computer. The processor 21 controls the respective blocks in order to realize various functions as the settlement terminal 20 in accordance with an operating system and an application program.

The main memory 22 corresponds to a main storage part of that computer. The main memory 22 includes a nonvolatile memory area and a volatile memory area. The main memory 22 stores the operating system and the application program in the nonvolatile memory area. Further, the main memory 22 may store data necessary for the processor 21 to execute processing for controlling the respective blocks in the nonvolatile memory area or the volatile memory area. The main memory 22 uses the volatile memory area as a work area the data of which is rewritable by the processor 21 as appropriate.

The auxiliary storage device 23 corresponds to an auxiliary storage part of that computer. Examples of the auxiliary storage device 23 can include an EEPROM, an HDD, an SSD, and the like. The auxiliary storage device 23 stores data to be used by the processor 21 to perform various types of processing and data generated in processing of the processor 21. The auxiliary storage device 23 may store the above-mentioned application program.

The communication interface 24 is for connecting the center server 60 to the settlement terminal 20 (processor 21) via the second network 50 and sending and receiving data in accordance with a predetermined communication protocol between the settlement terminal 20 and the center server 60.

The touch panel 25 functions as a display device and an input device of the settlement terminal 20. The code reader 26 reads the two-dimensional data code 80. The card reader 27 reads data of a credit card or a debit card. The card reader 27 includes ten key buttons for inputting a personal identification number.

The printer 28 prints settlement information on a slip sheet and issues a credit-card settlement slip, a debit-card settlement slip, or the like. Examples of the printer 28 can include a laser printer, an inkjet printer, and the like.

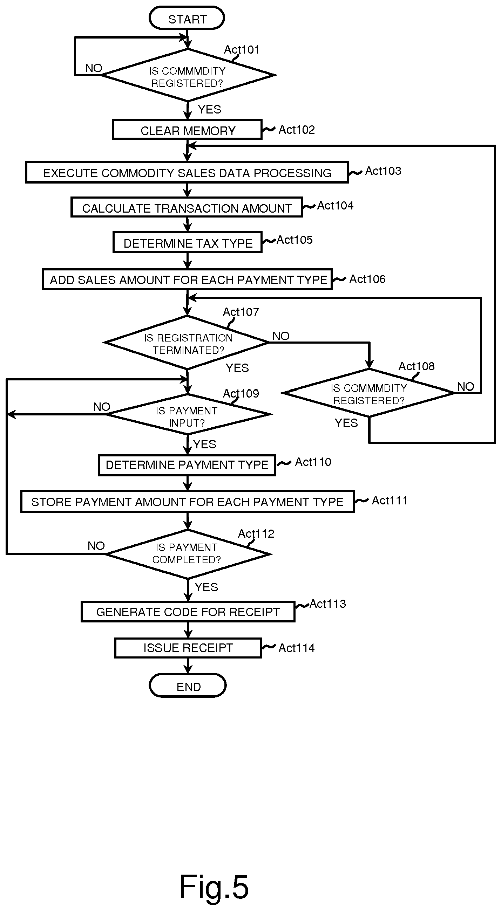

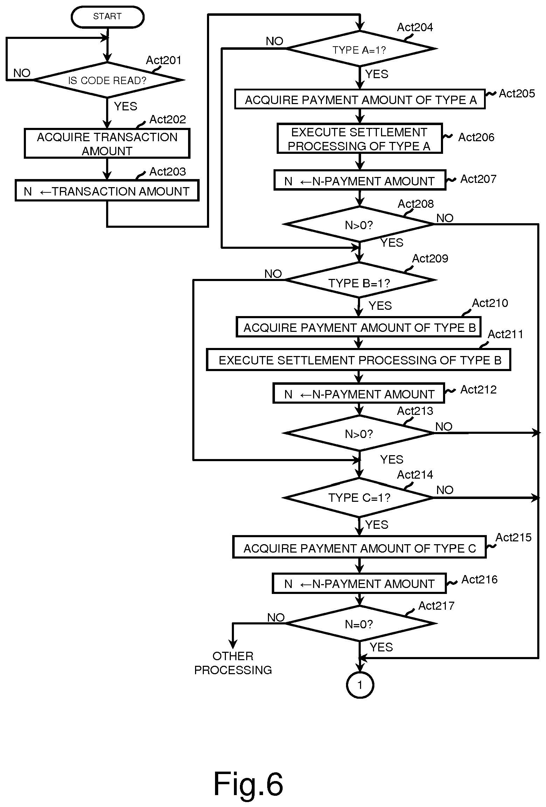

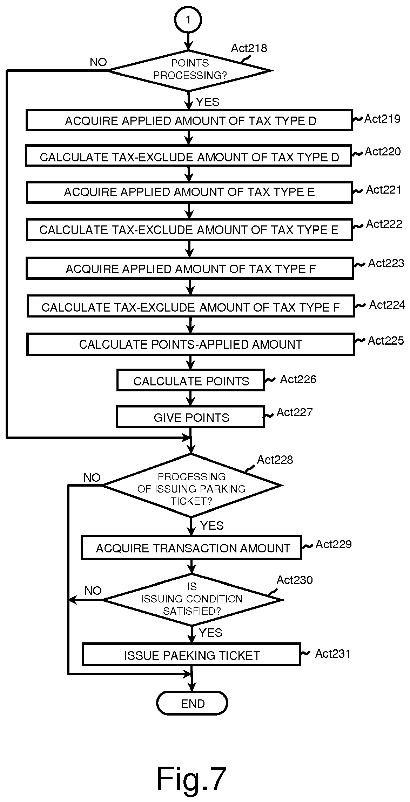

Fig. 5 is a flowchart showing main information processing executed by the processor 11 of the POS terminal 10 in accordance with the program stored in the main memory 12 or the auxiliary storage device 13. Further, Figs. 6 and 7 are flowcharts showing main information processing executed by the processor 21 of the settlement terminal 20 in accordance with the program stored in the main memory 22 or the auxiliary storage device 23. Hereinafter, an operation of the transaction settlement system will be described with reference to the figures. Note that the contents of the processing to be described below is an example, and processing procedures and screen examples thereof are not particularly limited as long as similar results can be provided.

As a specific example, it is assumed that a commodity M1 priced at 3,000 yen including the tax (5%) of the tax type D as tax-inclusive pricing, a commodity M2 priced at 4,000 yen including the tax (10%) of the tax type E as tax-inclusive pricing, and a commodity M3 priced at 5,000 yen including the tax (15%) of the tax type F as tax-inclusive pricing are purchased and, out of the transaction amount of 12,000 yen, 5,000 yen is paid by credit card, 5,000 yen is paid by debit card, and 2,000 yen is paid in cash.

The employee of the store first registers the commodity M1, the commodity M2, and the commodity M3 by operating the input device 15 of the POS terminal 10. When the employee of the store completes the registration of the commodities M1, M2, M3, the employee of the store inputs respective payment amounts in the payment methods by credit card, by debit card, and in cash by operating the input device 15.

In Act101 of Fig. 5, in order to receive such an operation, the processor 11 of the POS terminal 10 stands by until commodity registration of a first commodity is performed. When a commodity code of the commodity M1, for example, is input via the input device 15, the processor 11 determines that the commodity registration of the first commodity is performed. If the processor 11 determines that the commodity registration of the first commodity is performed (YES in Act101), the processor 11 clears, in Act102, a predetermined memory area formed in the main memory 12. Specifically, the processor 11 clears each of a transaction memory area, a transaction amount memory area, amount memory areas according to the tax types, and amount memory areas according to the payment types.

In Act103, the processor 11 executes commodity sales data processing after the processor 11 clears the memory area of the main memory 12. That is, the processor 11 searches a commodity master for the commodity code and reads a commodity record from the commodity master. The commodity record is stored in the commodity master in association with the commodity code. The commodity master is stored in the auxiliary storage device 13. Alternatively, the commodity master is stored in the store server 40. The commodity record includes a commodity code, a commodity name, a price, a tax type, and the like. The processor 11 calculates a sales amount by multiplying the price by the number of sold commodities. In a case where numeric input has been performed via the input device 15 before the commodity code is input, the number of sold commodities is a numerical value thereof. In a case where the numeric input has not been performed, the number of sold commodities is "1". The processor 11 generates commodity sales data including the commodity code, the commodity name, the price, the tax type, the number of sold commodities, and the sales amount and stores the generated commodity sales data in the transaction memory area of the main memory 12.

In Act104, the processor 11 calculates a transaction amount. That is, the processor 11 acquires the sales amount calculated in Act103, as the transaction amount.

Then, the processor 11 adds the acquired transaction amount (sales amount) to the value of the transaction amount memory area of the main memory 12. The sales amount of the commodity M1 is 3,000 yen. Therefore, the value (total transaction amount) of the transaction amount memory area becomes 3,000 yen. Note that in this embodiment, the sales amount and the transaction amount are identical amounts. Thus, the sales amount will be sometimes referred to as the transaction amount.

In Act105, the processor 11 determines a tax type.

In Act103, the tax type is included in the commodity sales data stored in the transaction memory area of the main memory 12. That is, the tax type is included in the commodity record of the commodity sales data. The tax type of the commodity M1 is "D". In Act106, the processor 11 adds the transaction amount to the value of the amount memory area of the tax type D in the main memory 12. Therefore, the value (applied transaction amount of the tax type D) of the amount memory area of the tax type D becomes 3,000 yen.

In Act107, the processor 11 determines whether or not the registration is terminated. If the processor 11 determines that the registration is not terminated (NO in Act107), the processor 11 determines, in Act108, whether or not commodity registration of a second commodity and subsequent commodity (or commodities) is performed. If the processor 11 determines that the commodity registration of the second commodity is not performed (NO in Act108), the processing of the processor 11 returns to the processing of Act107. Here, the processor 11 stands by until the registration is terminated or the commodity registration of the second commodity and the subsequent commodity (or commodities) is performed in the processing of Act107 and Act108.

When a commodity code of the commodity M2, for example, is input in the stand-by state of Act107 and Act108, the processor 11 determines that the commodity registration of the second commodity and the subsequent commodity (or commodities) is performed. When the processor 11 determines that the commodity registration of the second commodity and the subsequent commodity (or commodities) is performed (YES in Act108), the processing of the processor 11 returns to the processing of Act103. Then, the processor 11 repeats the above-mentioned processing in a similar manner. As a result, commodity sales data associated with the commodity M2 is stored in the transaction memory area of the main memory 12. Further, the sales amount of the commodity M2 is 4,000 yen, and thus the value (total transaction amount) of the transaction amount memory area of the main memory 12 becomes 7,000 yen. Further, the tax type of the commodity M2 is "E", and thus the value of the amount memory area of the tax type E in the main memory 12 becomes 4,000 yen.

When the above-mentioned processing, the processor 11 is put in the stand-by state of Act107 and Act108 again. For example, when a commodity code of the commodity M3 is input in this stand-by state, the processor 11 repeats the processing following Act103 again. As a result, commodity sales data associated with the commodity M3 is stored in the transaction memory area of the main memory 12. Further, the sales amount of the commodity M3 is ¥5,000 yen, and thus the value (total transaction amount) of the transaction amount memory area of the main memory 12 becomes 12,000 yen. Further, the tax type of the commodity M3 is "F", and thus the value of the amount memory area of the tax type F (applied transaction amount of the tax type F) in the main memory 12 becomes 5,000 yen.

For example, when it is detected that termination of the registration is instructed by an input of a sum key in the stand-by state of Act107 and Act108, the processor 11 stands by until payment information is input in Act109. In this stand-by state, when the payment method is selected via the input device 15 and the payment amount thereof is input (YES in Act109), the processor 11 determines the payment type in Act110 and adds the payment amount to the value of the amount memory area of that payment type in the main memory 12 in Act111. For example, when the payment method by credit card is selected and the payment amount of 5,000 yen is input, the value of the amount memory area of the payment type A in the main memory 12 becomes 5,000 yen.

In Act112, the processor 11 determines whether or not the payment is completed. That is, the processor 11 determines whether or not the total value (total payment amount) of the amount memory areas according to the payment types in the main memory 12 is equal to or larger than the value (total transaction amount) of the transaction amount memory area of the main memory 12. If the processor 11 determines that the total value

(total payment amount) of the amount memory areas according to the payment types is equal to or larger than the value (total transaction amount) of the transaction amount memory area, the processor 11 determines that the payment is completed. If the processor 11 determines that the total value (total payment amount) of the amount memory areas according to the payment types is smaller than the value (total transaction amount) of the transaction amount memory area of the main memory 12, the processor 11 determines that the payment is not completed. If the processor 11 determines that the payment is not completed (NO in Act112), the processing of the processor 11 returns to the processing of Act109. That is, the processor 11 stands by until next payment information is input.

When the payment method by debit card is selected via the input device 15 and the payment amount of 5,000 yen is input in this stand-by state, the value of the amount memory area of the payment type B in the main memory 12 becomes 5,000 yen. However, also at this time, the total value (total payment amount) of the amount memory areas according to the payment types in the main memory 12 is smaller than the value (total transaction amount) of the transaction amount memory area of the main memory 12, and thus the processor 11 stands by until next payment information is input.

Here, when the payment method in cash is selected via the input device 15 and the payment amount of 2,000 yen is input, the value of the amount memory area of the payment type C in the main memory 12 becomes 2,000 yen. Note that in the case of cash, an input of the payment amount may be omitted by considering all the remainder as being the payment amount in cash.

When the value of the amount memory area of the payment type C in the main memory 12 becomes 2,000 yen, the processor 11 determines that the payment is completed. When the processor 11 determines that the payment is completed (YES in Act112), the processor 11 generates the two-dimensional data code 80 to be printed on the receipt 70 in Act113. That is, the processor 11 generates the two-dimensional data code 80 on the basis of the transaction number and the transaction date and time, the total transaction amount stored in the transaction amount memory area of the main memory 12, the payment amounts stored in the amount memory areas according to the payment types in the main memory 12, and the payment amounts stored in the amount memory areas according to the tax types in the main memory 12, which are to be printed on the receipt 70.

When the processor 11 generates the two-dimensional data code 80, the processor 11 drives the printer 17 to issue the receipt 70 in Act11. At this time, the printer 17 prints the two-dimensional data code 80 generated in Act113 on the receipt sheet and issues the receipt 70. As a result, issued is the receipt 70 on which the two-dimensional data code 80 has been printed in addition to information regarding the transaction number, the transaction date and time, detailed data of the registered commodities (e.g., commodity names, prices, number of commodities), the transaction amount, payment data (e.g., payment methods, payment amounts, change), an applied amount for each tax rate, and the like. In the above-mentioned manner, the operation of the processor 11 on the one transaction is terminated.

Here, the computer including the processor 11 as the main part configures a generation means by executing the processing of Act113. Further, this computer configures an output means by executing the processing of Act114 in cooperation with the printer 17. Moreover, this computer configures a summing means for each tax rate by executing the processing of Act105 and Act106.

After the employee of the store acquires the receipt 70 on which the two-dimensional data code 80 has been printed, the employee of the store operates the settlement terminal 20 and performs the credit-card settlement and the debit-card settlement. That is, the employee of the store operates the code reader 26 of the settlement terminal 20 to cause the code reader 26 to read the two-dimensional data code 80 printed on the receipt 70.

In order to receive such an operation, the processor 21 of the settlement terminal 20 stands by until the two-dimensional data code 80 is read in Act201. When the two-dimensional data code 80 is input via the code reader 26, the processor 21 acquires the transaction amount by decoding that two-dimensional data code 80 in Act202. That is, the processor 21 acquires the real data associated with the classification information "102" as the transaction amount.
In the above-mentioned specific example, the transaction amount is 12,000 yen. In Act203, the processor 21 stores the transaction amount of 12,000 yen in a register N. The register N is in the main memory 22.

In Act204, the processor 21 decodes the two-dimensional data code 80 and determines whether or not the flag of the payment type A is "1". If the flag of the payment type A is "0", the processing of the processor 21 proceeds to processing of Act209.

If the processor 21 determines that the flag of the payment type A is "1" (YES in Act204), the processor 21 acquires the payment amount of the payment type A by decoding the two-dimensional data code 80 in Act205. In the above-mentioned specific example, the payment amount of the payment type A is 5,000 yen. In Act206, the processor 21 executes settlement processing of the payment type A. That is, the processor 21 executes credit-card settlement processing. Specifically, the processor 21 stands by until the data of the credit card is read by the card reader 27, and performs inquiry of the credit card via the center server 60 when the data of the credit card is read. When the credit-card payment is approved, the processor 21 drives the printer 28 to issue a settlement slip of the credit card.

When the processor 21 completes the settlement processing of the payment type A, the processor 21 subtracts the payment amount of the payment type A from the amount of the register N in the main memory 22 in Act207. Then, the processor 21 checks the amount of the register N in Act208.
Here, if the amount of the register N is equal to or larger than 1 yen, the transaction amount not settled remains. If the processor 21 determines that the amount of the register N is equal to or larger than "1" (YES in Act208), the processing of the processor 21 proceeds to the processing of Act209.

In Act209, the processor 21 decodes the two-dimensional data code 80 and determines whether or not the flag of the payment type B is "1". If the flag of the payment type B is "0", the processing of the processor 21 proceeds to processing of Act214.

If the processor 21 determines that the flag of the payment type B is "1" (YES in Act209), the processor 21 acquires the payment amount of the payment type B by decoding the two-dimensional data code 80 in Act210. In the above-mentioned specific example, the payment amount of the payment type B is ¥5,000. In Act211, the processor 21 executes settlement processing of the payment type B. That is, the processor 21 executes debit-card settlement processing. Specifically, the processor 21 stands by until the data of the debit card is read by the card reader 27. When the data of the debit card is read, the card reader 27 inputs the personal identification number via the ten key buttons. When the personal identification number is input, the processor 21 performs inquiry of the debit card via the center server 60. When drawing from a bank account specified by the debit card is established, the processor 21 drives the printer 28 to issue a settlement slip of the debit card.

When the processor 21 completes the settlement processing of the payment type B, the processor 21 subtracts the payment amount of the payment type B from the amount of the register N in the main memory 22 in Act212. Then, in Act213, the processor 21 checks the amount of the register N.
Here, if the amount of the register N is equal to or larger than 1 yen, the transaction amount not settled remains. If the processor 21 determines that the amount of the register N is equal to or larger than "1" (YES in Act213), the processing of the processor 21 proceeds to the processing of Act214.

In Act214, the processor 21 decodes the two-dimensional data code 80 and determines whether or not the flag of the payment type C is "1". If the processor 21 determines that the flag of the payment type C is "1" (YES in Act214), the processor 21 acquires the payment amount of the payment type C by decoding the two-dimensional data code 80 in Act215. In the above-mentioned specific example, the payment amount of the payment type C is 2,000 yen.
The processor 21 subtracts the payment amount of the payment type C from the amount of the register N in the main memory 22 in Act216. Then, the processor 21 checks the amount of the register N in Act217. Normally, the amount of the register N becomes "0".

If the processor 21 determines that the amount of the register N in the main memory 22 is "0" (YES in Act217), the processing of the processor 21 proceeds to processing of Act218 of Fig. 7. Note that if the processor 21 determines that the amount of the register N is "0" in Act208 or Act213 (NO in Act208 or Act213) or if the processor 21 determines that the flag of the payment type C is "0" in Act214 (NO in Act214), the processing of the processor 21 also proceeds to processing of Act218.

In Act218, the processor 21 determines whether or not to perform points processing. Note that it is assumed that, in the points processing, one point is given to the customer per 100 yen of a tax-excluded amount. For example, the processor 21 causes the touch panel 25 to display select buttons for instructing whether or not to perform points processing, and stands by until the touch panel 25 is operated by any of the select buttons being touched. Here, if the select button for instructing to perform points processing is operated (YES in Act218), the processor 21 executes processing of Act219 to Act227.

In Act219, the processor 21 acquires the transaction amount of the tax type D by decoding the two-dimensional data code 80. In Act220, the processor 21 calculates a tax-excluded transaction amount of the tax type D. In the above-mentioned specific example, the tax type D is the price including the tax of 5% and the transaction amount of the tax type D is 3,000 yen. Therefore, the processor 21 calculates a tax-excluded transaction amount of 2,857 yen. Note that if the flag of the tax type D is "0", the processor 21 may omit the processing of Act219 and Act220.

In Act221, the processor 21 acquires the transaction amount of the tax type E by decoding the two-dimensional data code 80. In Act222, the processor 21 calculates a tax-excluded transaction amount of the tax type E. In the above-mentioned specific example, the tax type E is the price including the tax of 10% and the transaction amount of the tax type E is 4,000 yen. Therefore, the processor 21 calculates a tax-excluded transaction amount of 3,636 yen. Note that if the flag of the tax type E is "0", the processor 21 may omit the processing of Act221 and Act222.

In Act223, the processor 21 acquires the transaction amount of the tax type F by decoding the two-dimensional data code 80. In Act224, the processor 21 calculates a tax-excluded transaction amount of the tax type F. In the above-mentioned specific example, the tax type F is the price including the tax of 15% and the transaction amount of the tax type F is 5,000 yen. Therefore, the processor 21 calculates a tax-excluded transaction amount of 4,347 yen. Note that if the flag of the tax type F is "0", the processor 21 may omit the processing of Act223 and Act224.

In Act225, the processor 21 calculates a points-applied amount. The points-applied amount is a sum of tax-excluded amounts. Therefore, in the above-mentioned specific example, the processor 21 calculates a points-applied amount of 10,850 yen.

In Act226, the processor 21 calculates points. Regarding the points, one point is given per 100 yen. Therefore, in the above-mentioned specific example, the processor 21 calculates 108 points.

In Act227, the processor 21 gives the points. That is, the processor 21 stands by until the data of a point card (also called loyalty card) is read by the card reader 27. When the data of the point card is read, the processor 21 performs processing of giving the points calculated in the processing of Act226 to the customer identified by a user ID of the point card. Specifically, the processor 21 sends data including the user ID and the points to the center server 60. The center server 60 adds the points obtained in this transaction to cumulative points of this user ID stored and managed in a membership database.

When the processor 21 completes the processing of Act219 to Act227, the processing of the processor 21 proceeds to processing of Act228. Note that in Act218, if the select button for instructing not to perform points processing is operated (NO in Act218), the processor 21 also proceeds to the processing of Act228, skipping the processing of Act219 to Act227.

In Act228, the processor 21 determines whether or not to perform processing of issuing a parking ticket. It is assumed that, as the parking ticket, a 3-hour-free parking ticket receipt is issued in a case where the transaction amount is equal to or larger than 3,000 yen, for example. For example, the processor 21 causes the touch panel 25 to display select buttons regarding whether or not to perform processing of issuing the parking ticket, and stands by until the touch panel 25 is operated by any of the select buttons being touched. Here, if the select button that instructs to execute the processing of issuing the parking ticket is operated (YES in Act228), the processor 21 executes processing of Act229 to Act231.

In Act229, the processor 21 acquires the transaction amount by decoding the two-dimensional data code 80. In Act230, the processor 21 determines whether or not a condition for issuing the parking ticket receipt is satisfied. In the above-mentioned specific example, the transaction amount is 10,500, and thus the issuing condition is satisfied. If the processor 21 determines that the issuing condition is satisfied (YES in Act230), the processing of the processor 21 proceeds to processing of Act231. In Act231, the processor 21 controls the printer 28 to issue a predetermined parking ticket receipt.

On the other hand, if the processor 21 determines that the condition for issuing the parking ticket receipt is not satisfied (NO in Act230), the operation of the processor 21 for the one transaction is terminated. Otherwise, in Act228, if the select button for instructing not to perform processing of issuing the parking ticket is operated by a touch (NO in Act228), the operation of the processor 21 for the one transaction is also terminated.

Here, the computer including the processor 21 as the main part configures a reading means by executing the processing of Act201 in cooperation with the code reader 26. Further, this computer configures an acquisition means by executing the processing of Act202, Act205, and Act210. Moreover, this computer configures a settlement processing means by executing the processing of Act206 and Act211. Further, this computer configures a points processing means by executing the processing of Act218 to Act227 in cooperation with the card reader 27. Further, this computer configures an issuing means by executing the processing Act228 to Act231 in cooperation with the printer 28.

In this manner, in accordance with a transaction processing system of this embodiment, the POS terminal 10 has a function of printing the two-dimensional data code 80, which is obtained by coding the transaction amount and the payment amounts according to the payment types (payment methods), on the receipt 70 that is the portable medium. Further, the settlement terminal 20 acquires the transaction amount and the payment amounts according to the payment types by decoding the two-dimensional data code 80 read by the code reader 26. The settlement terminal 20 has a function of processing settlement of each of the acquired payment amounts according to the payment types for the acquired transaction amount, the settlement being performed by using the payment amount according to the payment method identified by the payment type of each of the acquired payment amounts.

Therefore, in a case of settlement processing using the settlement terminal 20, the employee of the store who is in charge of the settlement and operates the POS terminal 10 and the settlement terminal 20 only needs to cause the code reader 26 of the settlement terminal 20 to read the two-dimensional data code 80 printed on the receipt 70. Thus, the operations on the settlement terminal 20 are simplified. This effect is significant in a case of using both the credit-card settlement and the debit-card settlement, for example.

Further, the POS terminal 10 has a function of summing up, for each tax rate, the transaction amounts of the commodities that are transaction targets on which the tax of the tax rate is imposed and printing, on the receipt 70, the two-dimensional data code 80 including the transaction amounts each summed up for each tax rate and the tax rates in addition to the total transaction amount of this transaction and the payment amounts according to the payment types (payment methods). Then, the settlement terminal 20 has a function of calculating the tax-excluded transaction amount on the basis of the tax rate obtained by decoding the two-dimensional data code 80 and the total transaction amount for that tax rate and calculating the points on the basis of the total amount of such tax-excluded transaction amounts.

Therefore, also in a case where reduced tax rate in which the tax rate differs between commodities is introduced and a service points system (also called loyalty program) in which points are given in a manner that depends on the tax-excluded transaction amount is applied, it becomes possible to accurately calculate points and give the calculated points to a customer without performing complicated operations on the settlement terminal 20 in accordance with this embodiment.

Further, as described above, the two-dimensional data code 80 includes the transaction amount. Therefore, also in a case where the parking ticket receipt is issued from the settlement terminal 20 on the basis of this transaction amount, the work of inputting the total transaction amount of the transaction through the settlement terminal 20 becomes unnecessary in accordance with this embodiment.

Hereinafter, modifications of the embodiment will be described. In the above-mentioned embodiment, the case where the three types of payment methods of the cash payment, the credit-card payment, and the debit-card payment are accepted as the payment methods for the transaction associated with commodity purchase and sale has been shown as an example. However, it is needless to say that the payment methods are not limited to these three types. Also, in the above-mentioned embodiment, the case where the different tax rates of 5%, 10% and 15% are imposed on the commodities has been shown as an example. However, it is needless to say that the tax rate types are not limited to these three types. Alternatively, the tax rate may be 0%, in other words, commodities on which no tax is imposed may be included. Alternatively, the tax rate may be only one type. The taxable objects are not limited to tangible objects such as commodities and may be intangible objects such as services.

The symbol is not limited to the two-dimensional data code 80. The symbol may be a multi-row barcode or the like. In short, any symbol can be employed as long as it can be read and decoded by the settlement terminal 20.

The portable medium is not limited to the receipt 70. For example, an information terminal capable of displaying symbols on a display, such as a smartphone, may be employed. In this case, the POS terminal 10 transmits or outputs the symbols to the information terminal by using short-distance wireless communication, for example.

The points processing means may be omitted. In this case, the processing of Act105 and Act106 is omitted from Fig. 5. Further, the processing of Act218 to Act227 is omitted from Fig. 7.

The tickets issued by the issuing means are not limited to the parking ticket receipts. The tickets issued by the issuing means can be any tickets as long as these are issued in a manner that depends on the total transaction amount of the transaction. Alternatively, the issuing means may be omitted. In this case, the processing of Act228 to Act231 is omitted from Fig. 7.

Note that delivery of the settlement terminal 20 is generally performed in a state in which programs such as a control program are stored in the main memory 22 or the auxiliary storage device 23, though not limited thereto. The delivery may be performed in a state in which the programs are not stored in the main memory 22 or the auxiliary storage device 23. In this case, the control program and the like delivered separately from this settlement terminal 20 may be written in a writable storage device of the settlement terminal 20 by user's operations. The delivery of the control program and the like can be performed by being recorded on a removable recording medium or by communication via a network. The recording medium can take any form as long as it can store programs and the programs stored therein are readable by the apparatus like a CD-ROM, a memory card, and the like. Further, the functions obtained by installing and downloading programs may be those that realize the functions in cooperation with the operating system (OS) and the like inside the apparatus.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A transaction settlement system, comprising:
a transaction processing apparatus that calculates a total transaction amount of a transaction and receives payment amounts for the total transaction amount in accordance with payment methods; and
a settlement apparatus that performs settlement of the transaction for which the payment amounts have been received by the transaction processing apparatus, wherein
the transaction processing apparatus includes
an input device that inputs data associated with the transaction,
an output device that outputs a symbol to a portable medium, the symbol including a transaction record of the transaction for which the payment amounts have been received, and
a first controller that
generates the symbol by coding the total transaction amount and the payment amounts according to the payment methods, and
causes the portable medium to output the symbol to the output device, and
the settlement apparatus includes
a reader that reads the symbol from the portable medium, and
a second controller that
acquires the total transaction amount and the payment amounts according to the payment methods by decoding the symbol read by the reader, and
performs settlement of the acquired payment amounts according to the payment methods for the acquired total transaction amount in accordance with the payment methods of the acquired payment amounts.

2. The transaction settlement system according to claim 1, wherein
the transaction processing apparatus further includes
a memory including
a transaction amount memory area for storing the total transaction amount, and
memory areas according to payment types for storing the payment amounts for the total transaction amount while each of the payment amounts is associated with each of the payment types identifying the payment methods, and
the first controller
calculates the total transaction amount on the basis of the input data associated with the transaction and stores the calculated total transaction amount in the transaction amount memory area,
calculates the payment amounts on the basis of the input data associated with the transaction and stores the calculated payment amounts in the memory areas according to the payment types, and
generates the symbol by coding the total transaction amount stored in the transaction amount memory area and the payment amounts according to the payment types which are stored in the memory areas according to the payment types.

3. The transaction settlement system according to claim 2, wherein
the data associated with the transaction, which is input by the input device, includes a commodity code that identifies a commodity that is a target of the transaction, the number of commodities that are targets of the transaction, the payment amounts, and the payment methods,
the memory includes a commodity master for storing a commodity record in association with the commodity code,
the commodity record includes a price of the commodity, and
the first controller
reads the commodity record associated with the input commodity code from the commodity master,
calculates the total transaction amount on the basis of the read commodity record and the input number of commodities that are the targets of the transaction, and
stores the input payment amount in the memory areas according to the payment types by which the input payment method is identified.

4. The transaction settlement system according to any one of claims 1 to 3, wherein
the first controller
calculates a transaction amount of one of a tangible object and an intangible object that is a target of the transaction for each tax rate of a tax imposed on the one of the tangible object and the intangible object, the transaction amount including the tax, and
generates the symbol by coding the calculated transaction amount for each tax rate and the tax rate in addition to the total transaction amount and the payment amounts according to the payment methods, and
the second controller
acquires the tax rate and the transaction amount for each tax rate by decoding the symbol read by the reader in addition to the total transaction amount and the payment amounts according to the payment methods,
calculates a tax-excluded transaction amount for each tax rate on the basis of the acquired tax rate and the acquired transaction amount for each tax rate, and
calculates a point to be given to a customer with respect to the tax-excluded transaction amount for each tax rate.

5. The transaction settlement system according to any one of claims 1 to 4, wherein
the second controller issues a predetermined ticket in a manner that depends on the acquired total transaction amount.

6. A transaction processing apparatus that calculates a transaction amount of a transaction and receives payment amounts for the transaction amount in accordance with payment methods, comprising:
an input device that inputs data associated with the transaction;
an output device that outputs a symbol to a portable medium, the symbol including a transaction record of the transaction for which the payment amounts have been received; and
a controller that
generates the symbol by coding the transaction amount and the payment amounts according to the payment methods, and
causes the output device to output the symbol to the portable medium.

7. The transaction processing apparatus according to claim 6, further comprising
a memory including
a transaction amount memory area for storing the transaction amount, and memory areas according to payment types for storing the payment amounts for the transaction amount while each of the payment amounts is associated with each of the payment types identifying the payment methods, wherein
the controller
calculates the transaction amount on the basis of the input data associated with the transaction and stores the calculated transaction amount in the transaction amount memory area,
calculates the payment amounts on the basis of the input data associated with the transaction and stores the calculated payment amounts in the memory areas according to the payment types, and
generates the symbol by coding the transaction amount stored in the transaction amount memory area and the payment amounts according to the payment types which are stored in the memory areas according to the payment types.

8. The transaction processing apparatus according to claim 7, wherein
the data associated with the transaction, which is input by the input device, includes a commodity code that identifies a commodity that is a target of the transaction, the number of commodities that are targets of the transaction, the payment amounts, and the payment methods,
the memory includes a commodity master for storing a commodity record in association with the commodity code,
the commodity record includes a price of the commodity, and
the first controller
reads the commodity record associated with the input commodity code from the commodity master,
calculates the transaction amount on the basis of the read commodity record and the input number of commodities that are the targets of the transaction, and
stores the input payment amount in the memory areas according to the payment types by which the input payment method is identified.

9. A settlement apparatus that performs settlement of a transaction having a transaction amount for which payment amounts have been received in accordance with payment methods, comprising:
a reader that reads a symbol from a portable medium, the symbol being obtained by coding the transaction amount and the payment amounts according to the payment methods; and
a controller that
acquires the transaction amount and the payment amounts according to the payment methods by decoding the symbol read by the reader, and
performs settlement of the acquired payment amounts according to the payment methods for the acquired transaction amount in accordance with the payment methods of the acquired payment amounts.

10. A settlement method for a settlement apparatus that performs settlement of a transaction having a transaction amount for which payment amounts have been received in accordance with payment methods, comprising the steps of:
reading a symbol from a portable medium by using a reader, the symbol being obtained by coding the transaction amount and the payment amounts according to the payment methods;
acquiring the transaction amount and the payment amounts according to the payment methods by decoding the read symbol; and
performing settlement of the acquired payment amounts according to the payment methods for the acquired transaction amount in accordance with the payment methods of the acquired payment amounts.

11. A non-transitory computer readable medium storing a program causing a computer to execute the method according to claim 10.
